# FASCICULE DE BREVET EUROPEEN

(11) **EP 2 726 757 B1**
(45) Date de publication et mention de la délivrance du brevet: **28.09.2016**
(21) Numéro de dépôt: 12731076.1
(22) Date de dépôt: 25.05.2012
(51) Int. Cl.: B60K 6/28, F02B 63/04, F16H 3/089, B60K 6/48

(54) **ARCHITECTURE ÉLECTRIQUE DE VÉHICULE HYBRIDE, VÉHICULE HYBRIDE ET PROCÉDÉ DE COMMANDE**
ELEKTRISCHE ARCHITEKTUR EINES HYBRIDFAHRZEUGS, HYBRIDFAHRZEUG UND STEUERVERFAHREN
ELECTRICAL ARCHITECTURE OF A HYBRID VEHICLE, HYBRID VEHICLE AND CONTROL METHOD

(30) Priorité: 28.06.2011 FR 1155753
(43) Date de publication de la demande: 07.05.2014
(73) Titulaire: Renault S.A.S., 92100 Boulogne-Billancourt (FR)
(72) Inventeur: VIGNON, Antoine, F-91430 Igny (FR); FREMAU, Nicolas, F-78470 Saint Remy les Chevreuses (FR); RANDI, Sid-Ali, F-73000 Chambery (FR)
(86) Numéro de dépôt international: PCT/FR2012/051190
(87) Numéro de publication internationale: WO 2013/001194

(56) Documents cités:
- EP-A1- 2 281 727
- DE-A1- 10 305 639
- FR-A1- 2 933 357
- US-A1- 2006 116 797
- US-A1- 2008 011 528

## Description

La présente invention concerne l'architecture électrique d'un véhicule comportant un moteur thermique d'entraînement et une machine électrique, reliée aux roues du véhicule par une transmission hybride.

Elle a pour objet l'architecture électrique d'un véhicule hybride, dont le moteur thermique entraîne un alternateur de recharge d'une batterie de bord basse tension reliée au démarreur du moteur thermique et au réseau de bord du véhicule, et dont la machine électrique de traction est alimentée par une batterie de traction haute tension pouvant être régénérée par le moteur thermique au point mort.

Cette invention trouve une application privilégiée sur un véhicule équipé d'une transmission hybride comportant deux arbres primaires concentriques portant chacun au moins un pignon de descente sur un arbre secondaire relié aux roues du véhicule permettant :
- de découpler le moteur thermique de la chaîne cinématique reliant la machine électrique aux roues,
- d'entraîner les roues par le moteur thermique avec ou sans l'appoint de la machine électrique, ou encore
- de coupler le moteur thermique et la machine électrique de manière à additionner en direction des roues, leurs couples respectifs.

Elle porte également sur un véhicule hybride, présentant une telle architecture électrique et sur son procédé de commande.

Les transmissions hybrides ont pour intérêt principal de faire bénéficier la chaîne cinématique d'entraînement d'un véhicule, de deux sources d'énergies, thermique et électrique, dont les apports de couple peuvent se cumuler dans un mode dit hybride, ou être utilisées séparément, soit dans un « mode thermique pur » où la machine électrique ne fournit pas de couple à la chaîne de traction, soit dans un mode « électrique pur », où le moteur thermique ne fournit pas de couple à la chaîne de traction. D'autres fonctionnalités sont également requises, telles que la possibilité de lancer le moteur thermique à l'arrêt ou en roulage, en utilisant la machine électrique comme démarreur, ou celle d'utiliser la machine électrique en générateur de courant, pour charger les batteries.

EP 2 281 727 A1 décrit une architecture électrique de véhicule automobile hybride comportant les caractéristiques du préambule de la revendication 1.

Le problème de l'autonomie et de la recharge des batteries est un problème crucial sur les véhicules hybrides. Pour recharger une batterie de traction complètement déchargée, soit à la suite d'un stationnement prolongé du véhicule, soit en cas d'échec de la stratégie de contrôle du niveau de charge, les véhicules hybrides conventionnels n'ont recours qu'à la « recharge en bord de route », imposant l'immobilisation du véhicule pour faire tourner la machine de traction en générateur à l'aide du moteur thermique.

La présente invention vise à supprimer cet inconvénient, en assurant les besoins énergétiques de la machine de traction à faible vitesse en cas de décharge complète de la batterie de traction du véhicule.

Dans ce but, elle propose que le moteur thermique et l'alternateur de recharge de la batterie de bord constituent un groupe électrogène à faible coût, capable d'assurer les besoins énergétiques de la machine électrique de traction en mode électrique.

De préférence, la batterie de traction et la batterie de bord sont reliées par un convertisseur de tension permettant d'abaisser la tension entre la batterie de traction et la batterie de bord.

Dans un premier mode de réalisation, le convertisseur de tension peut avoir un fonctionnement réversible, lui permettant également d'élever la tension d'un courant de charge circulant de la batterie de bord vers la batterie de traction.

Dans un deuxième mode de réalisation, l'alternateur est un alternateur à haute tension (pouvant par exemple être piloté par son rotor bobiné en haute ou basse tension), connectable directement à la batterie de traction associé ou non à un système de redressement ou de régulation de la tension.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1 illustre la régénération de la batterie de traction d'un véhicule hybride sur un exemple de transmission hybride au point mort,
- les figures 2 à 7 illustrent les différentes possibilités de fonctionnement de cette transmission,
- la figure 8 illustre une première architecture électrique adaptée à la transmission,

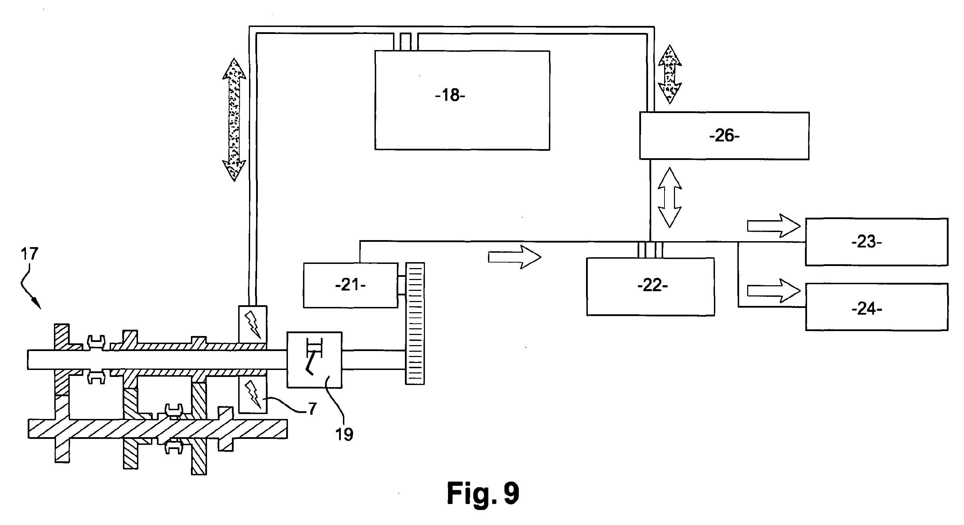

- la figure 9 illustre un premier mode de réalisation de l'invention, et
- la figure 10 illustre un deuxième mode de réalisation de l'invention.

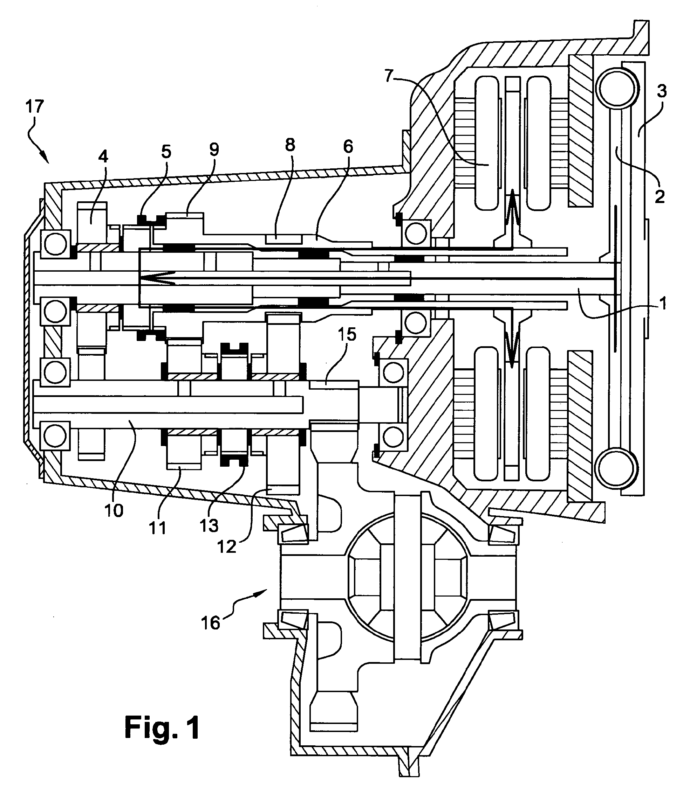

La transmission 17 des figures 1 à 7 comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15 vers un différentiel 16 relié aux roues (non représentées) du véhicule.

Le premier moyen de couplage 5 peut occuper au moins trois positions dans lesquelles :
- le moteur thermique est découplé de la chaîne cinématique reliant la machine électrique 7 aux roues (position 1),
- le moteur thermique entraîne les roues avec ou sans l'appoint de la machine électrique (position 2), et
- le moteur thermique et la machine électrique 7 sont couplés de manière à additionner en direction des roues leurs couples respectifs (position 3).

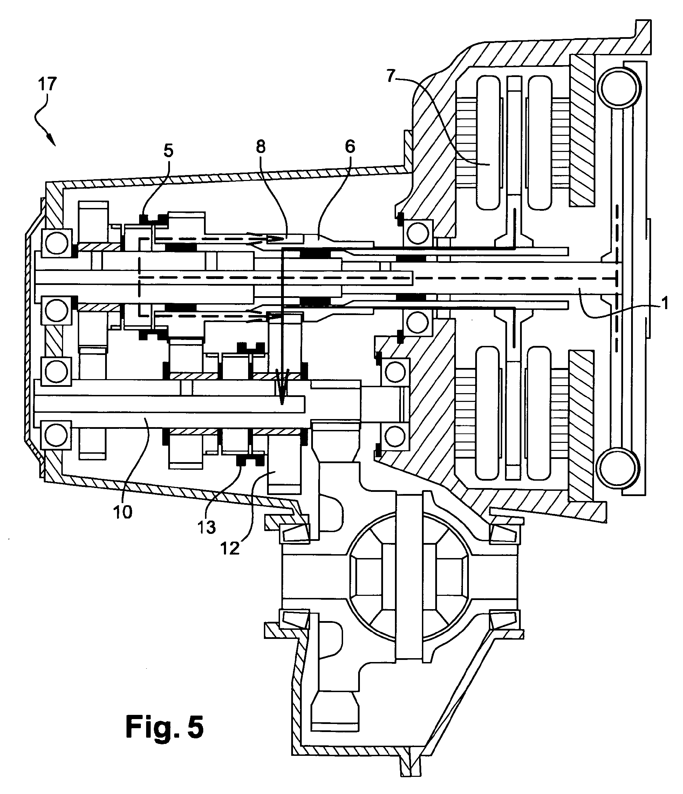

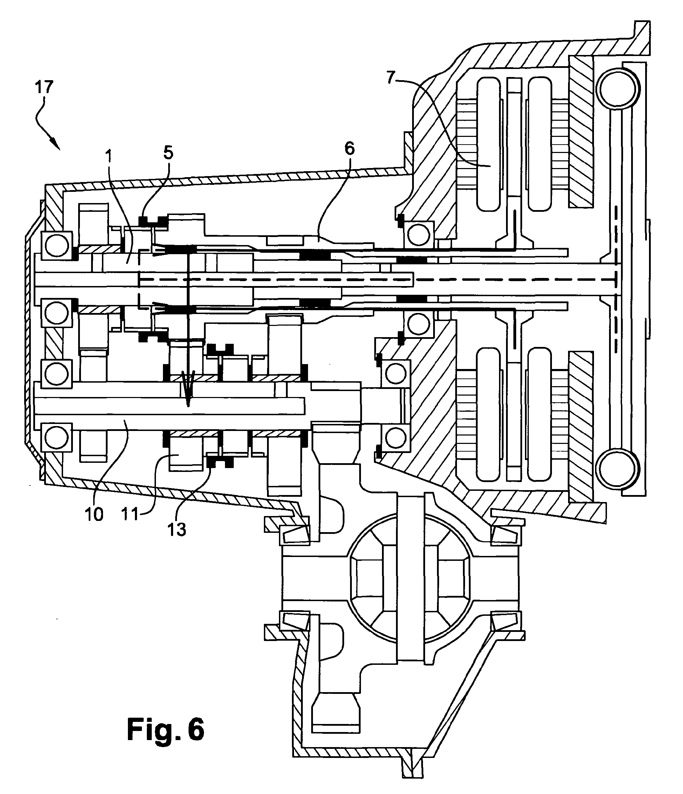

Sur la figure 1, le premier système de couplage est en position 3, comme sur que sur les figures 5 et 6, c'est à dire qu'il lie en rotation l'arbre primaire plein 1 et l'arbre primaire creux 6. Le deuxième système de couplage 13 est ouvert. La transmission est donc au « point mort ». Le moteur thermique tournant peut entraîner la machine électrique de traction fonctionnant alors en générateur pour recharger les batteries du véhicule à l'arrêt.

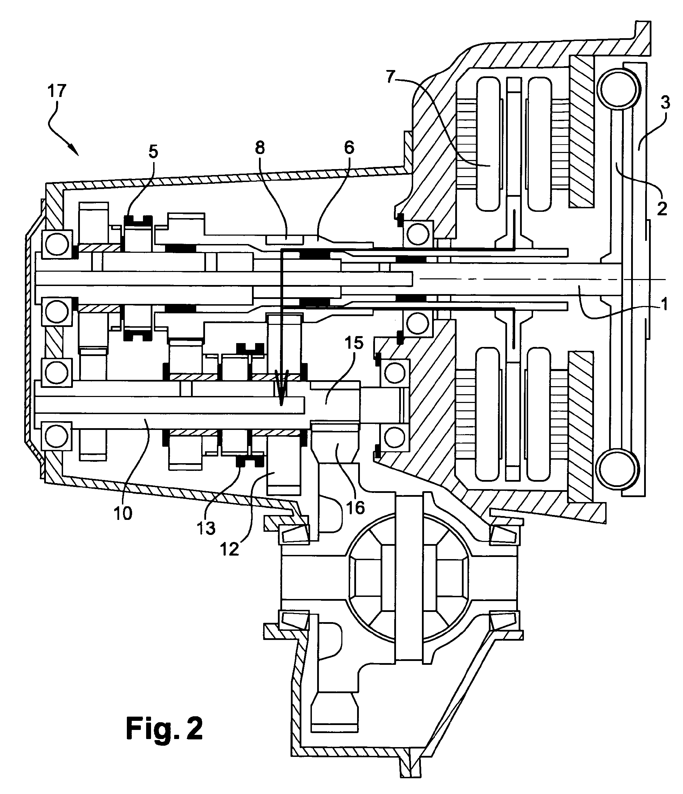

Sur la figure 2, le premier système de couplage 5 est ouvert (position 1), tandis que le deuxième système de couplage 13 est fermé de manière à solidariser le pignon fou du rapport court 12 avec l'arbre secondaire 10. La transmission est en mode électrique sur le rapport court, ou premier rapport de marche avant.

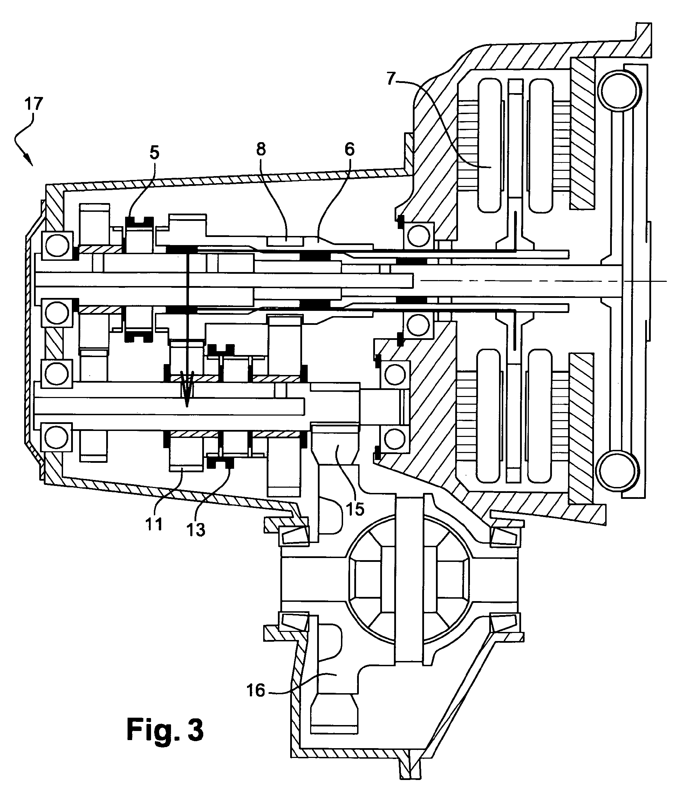

Sur la figure 3, le premier système de couplage 5 est toujours ouvert (position 1), tandis que le deuxième système de couplage 13 est fermé, de manière à solidariser le pignon fou du rapport intermédiaire 11 avec l'arbre secondaire 10. La transmission est en mode électrique sur le rapport intermédiaire, ou deuxième rapport de marche avant.

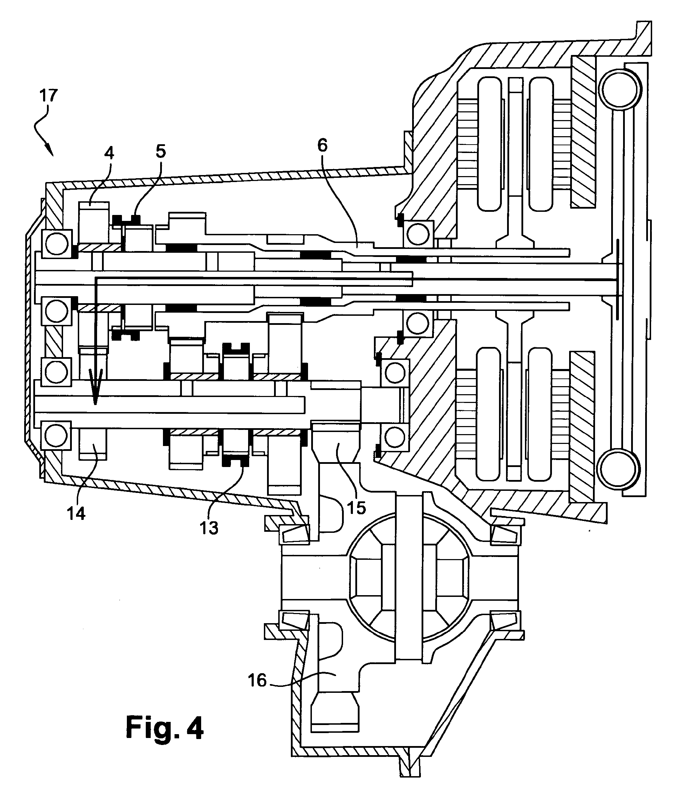

Sur la figure 4, le premier système de couplage 5 est fermé en position 2, de manière à rendre solidaire le pignon fou 4 porté par l'arbre plein 1, avec celui-ci, tandis que le deuxième moyen de couplage 13 est ouvert. La transmission est sur le rapport de rapport long, ou de troisième. La machine électrique ne fournit pas de couple.

Sur la figure 5, le premier moyen de couplage 5 est fermé en position 3, de manière à rendre solidaire l'arbre plein 1, de l'arbre creux 6. Le deuxième système de couplage 13 est fermé, de manière à rendre solidaire le pignon fou du rapport court 12 et l'arbre secondaire 10. La transmission est en mode hybride sur le rapport court. Les apports du moteur thermique et de la machine électrique sur la chaîne de traction se cumulent. Ils sont transmis de l'arbre primaire creux 6 sur l'arbre secondaire par la descente de pignons 8, 12.

Sur la figure 6, le premier moyen de couplage 5 toujours fermé, en position 3, comme sur la figure 5. L'arbre primaire plein 1, est donc solidaire de l'arbre primaire creux 6. Le deuxième système de couplage 13 est également fermé : le pignon fou 11 du rapport intermédiaire est solidaire de l'arbre secondaire 10. La transmission est en mode hybride sur le rapport intermédiaire. Les apports du moteur thermique et de la machine électrique sur la chaîne de traction se cumulent.

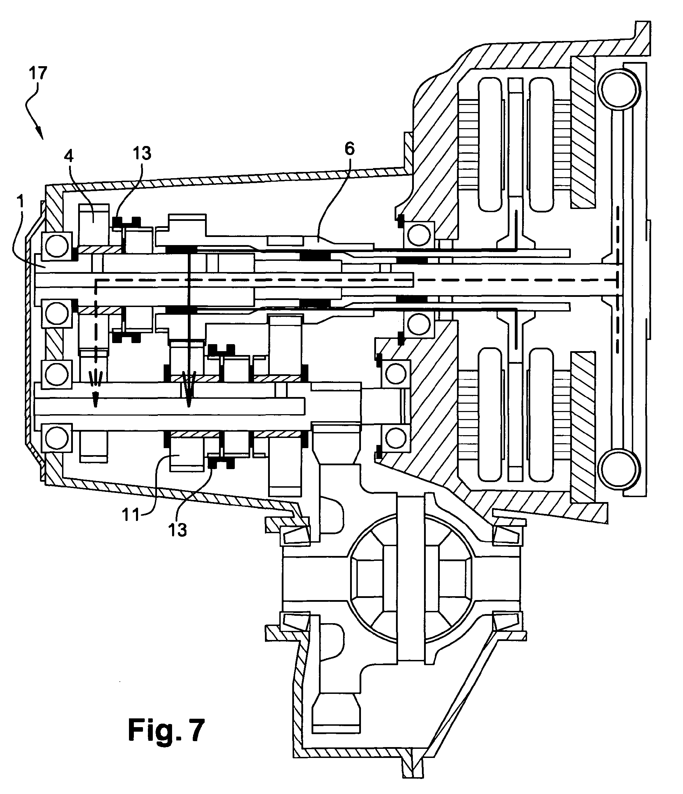

Sur la figure 7, le premier système de couplage 5 est fermé en position 2 : il rend solidaire le pignon fou 4 porté par l'arbre primaire plein 1, avec celui-ci. Par ailleurs, le deuxième moyen de couplage 13 est fermé de manière à rendre solidaire le pignon fou 11 de rapport intermédiaire avec l'arbre secondaire 10. La transmission est en mode hybride sur le rapport long, avec cumul des apports du moteur thermique et de la machine électrique.

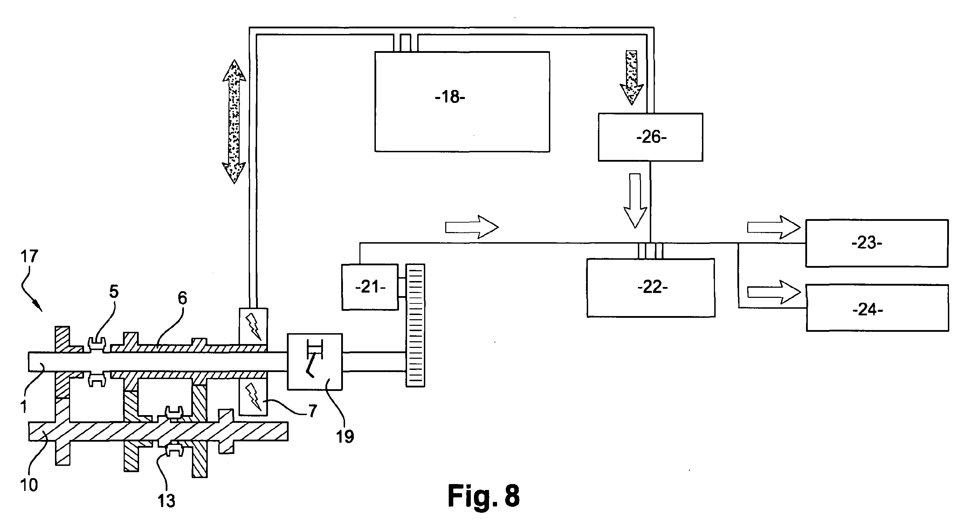

Sur la figure 8, on a représenté schématiquement une transmission hybride 17, telle que celle décrite ci-dessus, dont on reconnaît les arbres primaires 1, 6 et l'arbre secondaire 10, le moteur thermique 19 et la machine électrique de traction 7. La machine électrique 7 est reliée électriquement à la batterie de traction 18. Le moteur thermique 19 entraîne un alternateur 26 de recharge de la batterie de bord 22, alimentant le réseau de bord 23 et le démarreur 24 du moteur thermique 19. L'alternateur 21 alimente la batterie de bord en courant basse tension. En revanche, le courant circulant entre le moteur thermique 19 et la batterie de traction 18, est un courant à haute tension. Pour pouvoir recharger la batterie de bord 22, à partir de la batterie de traction, un convertisseur de courant 26 est disposé entre celles-ci. Le convertisseur 26 abaisse la tension du courant circulant de la batterie de traction 18 vers la batterie de bord 22, mais aucun courant de charge ne peut circuler de la batterie de bord 22 vers la batterie de traction 18. La batterie de traction 18 peut donc être rechargée à l'arrêt en « bord de route » par le moteur thermique fonctionnant en générateur, avec la transmission au point mort conformément à la figure 1, mais elle ne peut pas être rechargée par la batterie de bord 22.

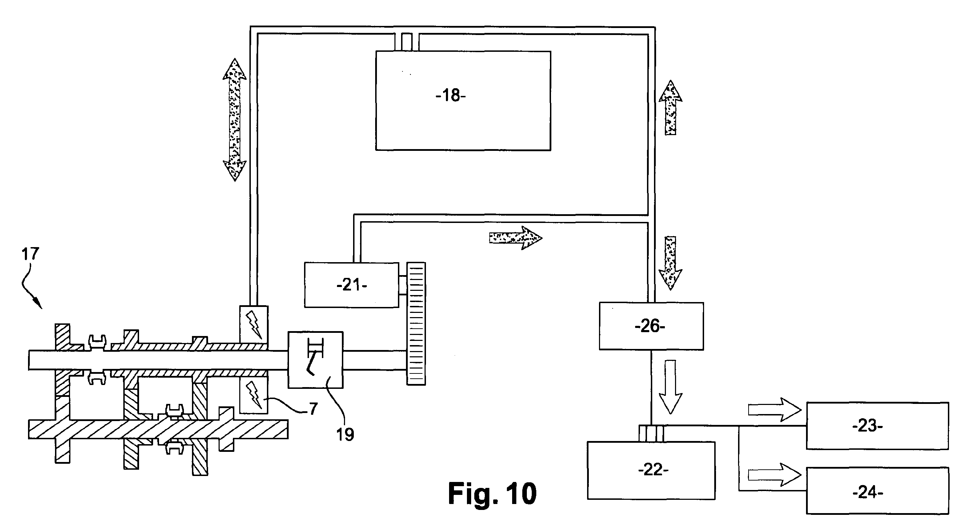

Sur la figure 10, les deux batteries 18, 22 sont toujours reliées par le convertisseur de tension 26. Toutefois, le convertisseur 26 est désormais un convertisseur réversible, permettant non seulement d'abaisser la tension entre la batterie de traction 18 et la batterie de bord 22, mais en plus de relever la tension d'un courant de charge inverse, issu de la batterie de bord 22 en direction de la batterie de traction 18. Le courant peut donc circuler dans les deux sens entre les deux batteries. Par ailleurs, l'alternateur a été renforcé, pour pouvoir satisfaire les besoins énergétiques de la batterie de traction, au moins lors du décollage du véhicule et du roulage à faible vitesse. Le moteur thermique et l'alternateur, constituent ainsi un groupe électrogène capable d'assurer les besoins énergétiques de la machine électrique de traction lors du décollage et aux faibles vitesses de déplacement du véhicule en mode électrique.

Sur la figure 11, l'alternateur 26 est un alternateur à haute tension, par exemple un alternateur rembobiné, connectable directement à la batterie de traction 18, sans le relais d'un convertisseur de tension. Ce dernier est toujours présent dans l'architecture. Cependant, l'alternateur 21 est désormais connecté à la batterie de traction 18, entre le convertisseur de tension 26 et celle-ci. Comme précédemment, le moteur thermique 19 et l'alternateur 21, constituent un groupe électrogène capable d'assurer les besoins énergétiques de la machine électrique de traction 7 lors du décollage et aux faibles vitesses de déplacement du véhicule en mode électrique. Cependant, la batterie de bord 22 est en dehors du circuit de charge de la batterie de traction 7, et le convertisseur de courant n'intervient que pour la recharge éventuelle de la batterie de bord à partir de la batterie de traction. Il n'a donc plus besoin d'être réversible.

Lorsque le moteur thermique a démarré (en principe à l'aide du démarreur alimenté par la batterie de bord), il est possible de faire décoller et rouler le véhicule en mode électrique, jusqu'à un certain seuil de vitesse. Le moteur thermique est alors utilisé comme générateur de recharge de la batterie de traction en mode électrique, par l'intermédiaire de la batterie de bord, tandis que toute l'énergie motrice est fournie par la machine électrique 7. Ce fonctionnement est typiquement celui d'un véhicule « hybride série », alors que la transmission est conçue au départ comme celle d'un « hybride parallèle » où le moteur thermique et la machine électrique transmettent tous les deux de l'énergie mécanique aux roues. Il permet de faire décoller le véhicule à partir de l'arrêt et de le faire rouler aux faibles vitesses. Dès que la vitesse de déplacement du véhicule est suffisante pour connecter le moteur thermique aux roues par la transmission, on peut changer de mode et basculer par exemple dans un autre mode, par exemple en mode thermique (figure 4) ou hybride (figure 5 ou 6), où le moteur thermique est couplé aux roues.

L'invention permet de tirer profit de la transmission dans un mode fonctionnement supplémentaire, dit « hybride série » en cas de décharge compète de la batterie de traction, en utilisant la machine électrique comme une source d'énergie motrice alimentée par la batterie de traction qui est rechargée par le moteur thermique fonctionnant en générateur. Ce mode supplémentaire peut être mis en oeuvre pour un coût modique par exemple par re-bobinage d'un l'alternateur en haute tension associé à une régulation de tension, sans nécessiter la présence d'un onduleur de pilotage pour une deuxième machine. Selon le dimensionnement des organes mécaniques et électriques de la transmission, ce mode fonctionnement, dit « hybride série », est possible au moins sur un premier rapport de transmission court, jusqu'à un seuil de vitesse, au-delà duquel, soit l'énergie motrice de la machine électrique et celle de la machine électrique se cumulent en mode hybride, soit la seule source motrice utilisée est le moteur thermique.

## Revendications

1. Architecture électrique de véhicule automobile hybride comportant un moteur thermique (19) entraînant un alternateur de recharge (21) d'une batterie de bord basse tension (22) reliée au démarreur (24) du moteur thermique et au réseau de bord (24) du véhicule, une machine électrique de traction (7) alimentée par une batterie de traction haute tension (18), et une transmission hybride (17) disposant de moyens de couplage (5) qui peuvent occuper au moins une première position dans lesquelles le moteur thermique (19) est découplé de la chaîne cinématique reliant la machine électrique (7) aux roues, une deuxième position dans laquelle les roues sont entraînées par le moteur thermique (19) avec ou sans l'appoint de la machine électrique (7), et une troisième position dans laquelle le moteur thermique (19) et la machine électrique (7) sont couplés de manière à additionner leurs couples respectifs, en direction des roues,
**caractérisée en ce que** le moteur thermique (19) et l'alternateur (21) constituent un groupe électrogène capable d'assurer les besoins énergétiques de la machine électrique de traction (7) en mode électrique.

2. Architecture électrique selon la revendication 1 ou 2, **caractérisée en ce que** les deux batteries (18, 22) sont reliées par convertisseur de tension (26) permettant d'abaisser la tension entre la batterie de traction (18) et la batterie de bord (22).

3. Architecture électrique selon la revendication 2, **caractérisée en ce que** le convertisseur de tension (26) a un fonctionnement réversible lui permettant d'élever la tension d'un courant de charge circulant de la batterie de bord (22) vers la batterie de traction (18).

4. Architecture électrique selon la revendication 1, ou 2, **caractérisée en ce que** l'alternateur (21) est un alternateur haute tension connectable directement à la batterie de traction (18).

5. Architecture électrique selon la revendication 4, **caractérisée en ce que** l'alternateur (21) est connecté à la batterie de traction entre le convertisseur de tension (26) et celle-ci.

6. Véhicule hybride, **caractérisé en ce que** son architecture électrique est conforme à l'une des revendications précédentes.

7. Procédé de commande d'un véhicule hybride selon la revendication 6, **caractérisé en ce que** le moteur thermique (19) est utilisé comme générateur pour recharger la batterie de traction (18) pendant le roulage du véhicule en mode électrique.

8. Procédé de commande d'un véhicule hybride selon la revendication 7, **caractérisé en ce que** le moteur thermique (19) est utilisé comme générateur pour recharger la batterie de traction (18) lors du décollage du véhicule en mode électrique.

9. Procédé de commande selon la revendication 7 ou 8, **caractérisé en ce qu'**on utilise la machine électrique (7) comme seule source d'énergie motrice jusqu'à à un seuil de vitesse, où on couple le moteur thermique aux roues.

10. Procédé de commande selon la revendication 7, 8 ou 9, **caractérisé en ce que** la machine électrique (7) est utilisée comme seule source d'énergie motrice jusqu'à un seuil de vitesse, au delà on peut passer dans un mode hybride ou en mode thermique.

## Patentansprüche

1. Elektrische Architektur eines Hybridfahrzeugs, die einen Verbrennungsmotor (19), welcher eine Lichtmaschine (21) zum Aufladen einer Niederspannungs-Bordbatterie (22), die mit dem Anlasser (24) des Verbrennungsmotors und dem Bordnetz (24) des Fahrzeugs verbunden ist, antreibt, eine elektrische Zugmaschine (7), die von einer Hochspannungs-Traktionsbatterie (18) gespeist wird, und eine Hybridübertragung (17) aufweist, die über Kopplungsmittel (5) verfügt, die mindestens eine erste Position, in denen der Verbrennungsmotor (19) vom Antriebsstrang, der die elektrische Maschine (7) mit den Rädern verbindet, abgekoppelt ist, eine zweite Position, in der die Räder von dem Verbrennungsmotor (19) mit oder ohne Unterstützung der elektrischen Maschine (7) angetrieben werden, und eine dritte Position einnehmen können, in der der Verbrennungsmotor (19) und die elektrische Maschine (7) gekoppelt sind, um ihre jeweiligen Drehmomente in Richtung der Räder zu addieren,
**dadurch gekennzeichnet, dass** der Verbrennungsmotor (19) und die Lichtmaschine (21) ein Stromaggregat bilden, das in der Lage ist, den Energiebedarf der elektrischen Traktionsmaschine (7) im Elektrobetrieb zu gewährleisten.

2. Elektrische Architektur nach Anspruch 1 oder 2, **dadurch gekennzeichnet, dass** die beiden Batterien (18, 22) durch einen Spannungswandler (26), der die Senkung der Spannung zwischen der Traktionsbatterie (18) und der Bordbatterie (22) ermöglicht, verbunden sind.

3. Elektrische Architektur nach Anspruch 2, **dadurch gekennzeichnet, dass** der Spannungswandler (26) eine umkehrbare Funktion ausführt, die ihm erlaubt, die Spannung eines Ladestroms, der von der Bordbatterie (22) zu der Traktionsbatterie (18) zirkuliert, zu erhöhten.

4. Elektrische Architektur nach Anspruch 1 oder 2, **dadurch gekennzeichnet, dass** die Lichtmaschine (21) eine Hochspannungs-Lichtmaschine ist, die direkt mit der Traktionsbatterie (18) verbunden werden kann.

5. Elektrische Architektur nach Anspruch 4, **dadurch gekennzeichnet, dass** die Lichtmaschine (21) mit der Traktionsbatterie zwischen dem Spannungswandler (26) und dieser verbunden ist.

6. Hybridfahrzeug, **dadurch gekennzeichnet, dass** seine elektrische Architektur einem der vorhergehenden Ansprüche entspricht.

7. Verfahren zur Steuerung eines Hybridfahrzeugs nach Anspruch 6, **dadurch gekennzeichnet, dass** der Verbrennungsmotor (19) während des Rollens des Fahrzeugs im Elektrobetrieb als Generator zum Laden der Traktionsbatterie (18) verwendet wird.

8. Verfahren zur Steuerung eines Hybridfahrzeugs nach Anspruch 7, **dadurch gekennzeichnet, dass** der Verbrennungsmotor (19) beim Start des Fahrzeugs im Elektrobetrieb als Generator zum Laden der Traktionsbatterie (18) verwendet wird.

9. Steuerungsverfahren nach Anspruch 7 oder 8, **dadurch gekennzeichnet, dass** die elektrische Maschine (7) bis zu einem Geschwindigkeitsschwellenwert, an dem der Verbrennungsmotor mit den Rädern gekoppelt wird, als einzige Motorenergiequelle verwendet wird.

10. Steuerungsverfahren nach Anspruch 7, 8 oder 9, **dadurch gekennzeichnet, dass** die elektrische Maschine (7) bis zu einem Geschwindigkeitsschwellenwert, ab dem in einen Hybridmodus oder einen thermischen Modus gewechselt werden kann, als einzige Motorenergiequelle verwendet wird.

## Claims

1. Electrical architecture of a hybrid motor vehicle comprising a combustion engine (19) driving an alternator (21) that recharges a low-voltage on-board battery (22) connected to the starter (24) of the combustion engine and to the vehicle on-board network (24), an electric traction machine (7) powered by a high-voltage traction battery (18) and a hybrid transmission (17) having coupling means (5) that can occupy at least a first position in which the combustion engine (19) is uncoupled from the drive train connecting the electric machine (7) to the wheels, a second position in which the wheels are driven by the combustion engine (19) with or without top-up from the electric machine (7), and a third position in which the combustion engine (19) and the electric machine (7) are coupled in such a way as to combine their respective torques, bound for the wheels,
**characterized in that** the combustion engine (19) and the alternator (21) constitute an electricity generator set capable of supplying the energy requirements of the electric traction machine (7) in electric mode.

2. Electrical architecture according to Claim 1 or 2, **characterized in that** the two batteries (18, 22) are connected by the voltage transformer (26) enabling the voltage between the traction battery (18) and the on-board battery (22) to be reduced.

3. Electrical architecture according to Claim 2, **characterized in that** the voltage transformer (26) has a reversible functioning enabling it to raise the voltage of a charging current circulating from the on-board battery (22) in the direction of the traction battery (18).

4. Electrical architecture according to Claim 1 or 2, **characterized in that** the alternator (21) is a high-voltage alternator directly connectable to the traction battery (18).

5. Electrical architecture according to Claim 4, **characterized in that** the alternator (21) is connected to the traction battery between the voltage transformer (26) and this battery.

6. Hybrid vehicle, **characterized in that** its electrical architecture conforms to one of the preceding claims.

7. Control method of a hybrid vehicle according to Claim 6, **characterized in that** the combustion engine (19) is used as a generator to recharge the traction battery (18) while the vehicle is traveling in electric mode.

8. Control method of a hybrid vehicle according to Claim 7, **characterized in that** the combustion engine (19) is used as a generator to recharge the traction battery (18) when the vehicle is moving off in electric mode.

9. Control method according to Claim 7 or 8, **characterized in that** one uses the electric machine (7) as the only source of driving energy up to a speed threshold, where one couples the combustion engine to the wheels.

10. Control method according to Claim 7, 8 or 9, **characterized in that** the electric machine (7) is used as the only source of driving energy up to a speed threshold, beyond which one can pass to a hybrid mode or to combustion mode.
